# EUROPEAN PATENT SPECIFICATION

(11) **EP 2 666 282 B1**
(45) Date of publication and mention of the grant of the patent: **20.06.2018**
(21) Application number: 12703178.9
(22) Date of filing: 17.01.2012
(51) Int. Cl.: H04M 1/725, H04N 21/422

(54) **REMOTE CONTROL INTERFACE PROVIDING HEAD-UP OPERATION AND VISUAL FEEDBACK**
FERNSTEUERSCHNITTSTELLE MIT HEAD-UP OPERATION UND OPTISCHER RÜCKMELDUNG
INTERFACE DE TELECOMMANDE AVEC TÊTE HAUTE DE FONCTIONNEMENT ET RÉTROACTION VISUELLE

(30) Priority: 18.01.2011 US 201161433941 P
(43) Date of publication of application: 27.11.2013
(73) Proprietor: Savant Systems LLC., Osterville, MA 02655 (US)
(72) Inventor: MADONNA, Robert, P., Osterville MA 02655 (US); CIPOLLO, Nicholas, J., Osterville, MA 02655 (US)
(74) Representative: Rupprecht, Kay
(86) International application number: PCT/US2012/000026
(87) International publication number: WO 2012/099702

(56) References cited:
- EP-A2- 1 182 853
- US-A1- 2009 239 587
- US-A1- 2010 088 632
- US-A1- 2010 156 656
- US-A1- 2010 277 337
- Dan Frommer: "15 Things You Can Remote Control With Your iPhone", , 21 July 2009 (2009-07-21), XP55025600, Retrieved from the Internet: URL:http://www.businessinsider.com/15-thin gs-you-can-remote-control-with-your-iphone -2009-7 [retrieved on 2012-04-25]

## Description

### RELATED APPLICATIONS

This Application claims priority to U.S. Provisional Patent Application Serial No. 61/433,941 filed on January 18, 2011 titled "Remote Control Interface Providing Head-Up Operation and Visual Feedback When Interacting with an On Screen Display".

### BACKGROUND

### Technical Field

The present disclosure relates generally to device control, and more particularly to a remote control interface for use with a programmable multimedia controller that controls a variety of electronic devices, such as audio devices, video devices, telephony devices, data devices, security devices, motor-operated devices, relay-operated devices, and/or other types of devices.

### Background Information

With the ever increasing complexity of electronic devices, simple yet effective device control is becoming increasingly important. While once electronic devices could be adequately controlled with only a handful of analog knobs and switches, modern electronic devices often present users with a vast array of configurable options and parameters, which require complex controls to manipulate and select. In response to users' demands for "convenience," these controls are often implemented on device-specific or "universal" handheld remote control units, which use Infrared (IR), radio-frequency (RF), or other types of signals to interface with the electronic devices being controlled. Yet actual convenience is seldom achieved with conventional remote control units.

Many device-specific and "universal" remote control units are designed with a button-centric paradigm, such that numerous function-specific buttons are crowded into a relatively small space on the face of the remote control unit. In some cases, the function-specific buttons are physical buttons, that are coupled to sensors or switches that detect their depression. In other cases, the function-specific buttons may be virtual buttons, displayed on a touch screen display (i.e., a display that is capable of displaying visual output and also configured to receive touch data). However, such button-centric remote control units suffer a variety of shortcomings.

The crowded button layout of button-centric remote control units often requires a user to frequently look down at the remote control unit, in order to pick out the desired button from the remote control unit. Thus the user must divert his or her attention from, for example, an on-screen display being shown on a display device, for example, a television, to look at the remote control unit. As such, the user is often forced to operate the remote control unit in a "head-down" manner.

Even when looking down at the remote control unit, the crowded button layout of button-centric remote control units often makes it difficult to select a desired button from the many buttons available, especially in low-light conditions. A user may simply not be able to see the often small and cryptic labels associated with each button, or may not understand their meaning. If a user inadvertently presses the "wrong" button, a device may perform an unwanted action or enter an undesired mode or state. This may confuse or aggravate the user.

More recently, attempts have been made to move away from a button-centric paradigm, and rather than simply display virtual buttons on a touch screen display of a remote control unit, to receive gestures or other more complex input on the touch screen display. While certain advantages have been achieved in moving away from a button-centric paradigm, such remote control units typically suffer their own set of shortcomings. Foremost among those, is that such units typically do not provide feedback or confirmation to a user that their control input is being received and registered correctly. Unlike a physical button, that may reassure the user with a responsive movement when pressed, a touch screen display typically does not provide any immediate feedback. A user may be unsure if their selection was received or registered correctly.

Of late, a variety of interfaces have been developed for smartphones, tablet computers and other "mobile devices" that allow such devices to operate as device-specific or "universal" handheld remote control units. However, the underlying shortcoming discussed above of dedicated remote control units have migrated over to the interfaces used with smartphones, tablet computers and other "mobile devices." US 2010/277337 and US 2009/239587 disclose systems where the user can control electronic devices by using gestures via a touch screen. What is needed is an improved remote control interface that may address some or all of the above described shortcomings.

### SUMMARY

According to one embodiment of the present disclosure, a remote control interface is provided that allows a user to interact with, and otherwise control, a programmable multimedia controller from a mobile device having a touch screen display, in a largely "head-up" manner, while providing visual feedback on the mobile device to confirm touch input.

A remote control interface client application executing on the mobile device may display an input interface on the touch screen display. The user may enter touch input, including taps, hold, swipes or pans, on the touch screen display. Such touch input may be processed and communicated to the programmable multimedia controller, which displays an on-screen display menu system on a display device, such as a television coupled to the programmable multimedia controller. The user may direct the majority of his or her attention to the on-screen display menu system on the display device, rather than the touch screen display on the mobile device. In response to touch input, the control interface client application may communicate appropriate commands to the programmable multimedia controller to cause it to display and manipulate the on-screen display menu system on the display device, and register selections therein. Further, the control interface client application may cause the display of visual feedback on the touch screen display of the mobile device that is specific to the type of touch input received on the touch screen display. This visual feedback may differentiate between different types of touch input, for example, between taps, holds, swipes and pans, and between touch input in different directions (e.g., left, right, up, and down). Such visual feedback may be provided while the input is in progress, and/or shortly after it is completed.

### BRIEF DESCRIPTION OF THE DRAWINGS

The description below refers to the accompanying drawings, of which:
Fig. 1 is a block diagram of an example programmable multimedia controller interconnected to a number of devices;
Fig. 2 is a schematic block diagram of an example hardware architecture of the example programmable multimedia controller;
Fig. 3 is block diagram of an example hardware architecture of an example mobile device, which may operate with the programmable multimedia controller of Fig. 1;
Fig. 4 is a diagram of an example on-screen display menu system of remote control interface that may be displayed on a display device coupled to the programmable multimedia controller;
Fig. 5A is a screen shot of an example input interface that may be shown on the touch screen display of a mobile device;
Fig. 5B is a screen shot of an example input interface illustrating visual feedback provided in response to a virtual button tap or hold, which may be shown on the touch screen display of a mobile device;
Fig. 5C is a screen shot of an example input interface illustrating visual feedback provided in response to a tap or hold in the gesture field, that may be shown on the touch screen display of a mobile device;
Fig. 5D is a screen shot of an example input interface illustrating visual feedback provided in response to a potential pan, which may be shown on the touch screen display of a mobile device;
Fig. 5E is a screen shot of an example input interface illustrating visual feedback provided in response to an ongoing pan or a swipe in the gesture filed, which may be shown on the touch screen display of a mobile device;
Fig. 6A is a flow chart of an example sequence of steps that may be implemented by the remote control interface client application, to interoperate with a programmable multimedia controller, to provide a remote control interface;
Fig. 6B is a flow chart of an example sequence of steps that may be implemented by the remote control interface client application, to determine if a virtual button has been tapped or a tap has been received in the gesture field, and to take an appropriate response;
Fig. 6C is a flow chart of an example sequence of steps that may be implemented by the remote control interface client application, to determine whether a potential pan is completed to become an actual ongoing pan, and to take an appropriate response;
Fig. 6D is a flow chart of an example sequence of steps that may be implemented by the remote control interface client application, to register a swipe and take an appropriate response;
Fig. 6E is a flow chart of an example sequence of steps that may be implemented by the remote control interface client application, to determine if a virtual button has been held or a hold has been received in the gesture field, and to take an appropriate response; and
Fig. 6F is a flow chart of an example sequence of steps that may be implemented by the remote control interface client application, to implement a heartbeat indicator.

### DETAILED DESCRIPTION OF ILLUSTRATIVE EMBODIMENTS

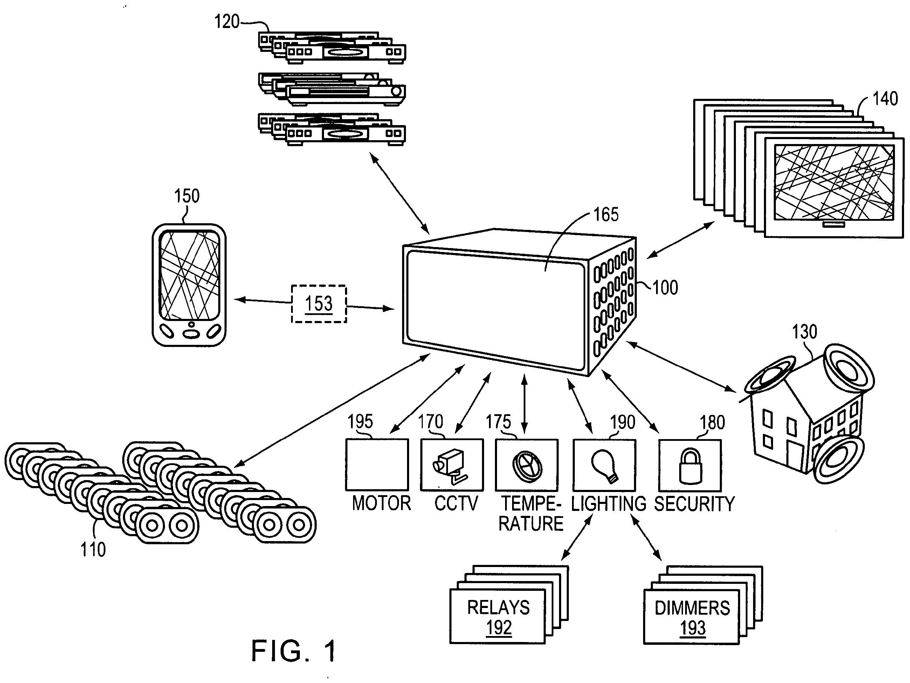

Fig. 1 is a block diagram of an example programmable multimedia controller 100 interconnected to a number of devices. The term "programmable multimedia controller" should be interpreted broadly as a device capable of controlling, switching data between, and/or otherwise interoperating with a variety of electrical and electronic devices, such as audio, video, telephony, data, security, motor-operated, relay-operated, heating, ventilation, and air conditioning (HVAC), energy management and/or other types of devices.

The programmable multimedia controller 100 may be coupled to a variety of A/V devices, including audio source devices 110, such as compact disk (CD) players, digital video disc (DVD) players, microphones, digital video recorders (DVRs), cable boxes, audio/video receivers, personal media players, and other devices that source audio signals; may be coupled to a variety of video source devices 120, such as digital video disc (DVD) players, digital video recorders (DVRs), cable boxes, audio/video receivers, personal media players and other devices that source video signals; may be coupled to a variety of audio output devices 130, such as speakers, devices that incorporate speakers, and other devices that output audio; and may be coupled to a variety of display devices 140, such as televisions, monitors, and other devices that output video.

Further, the programmable multimedia controller 100 may be coupled to, control, and otherwise interoperate with a variety of other types of devices, either directly, or through one or more intermediate controllers. For example, the programmable multimedia controller 100 may be coupled to a closed-circuit television (CCTV) control system 170 that manages a system of cameras positioned about a home or other structure, HVAC control and/or energy management system 175 that manages HVAC devices to regulate environmental functions and/or energy management devices in the home or other structure, and/or a security system 180 that manages a plurality of individual security sensors in the home or other structure. In response to control commands received from the programmable multimedia controller 100, the CCTV control system 170, the HVAC control system and/or energy management system 175, and the security system 180 may manage the devices under their respective immediate control.

Further, the programmable multimedia controller 100 may be coupled to, control, and otherwise interoperate with, one or more electronic lighting controllers 190. The one or more electronic lighting controllers 190 may be coupled to, for example, via wired or wireless links, a plurality of relays 192 and/or dimmer units 193. Similarly, the programmable multimedia controller 100 may be coupled to, control, and otherwise interoperate with, one or more motor operated device controllers 195, for example, one or more automatic window shade controllers, or other types of controllers. As with lighting control, in response to control commands received from the programmable multimedia controller 100, the motor-operated device controllers 195 may selectively trigger motor-operated devices (not shown) in various rooms of the home or other structure, to achieve desired effects.

The programmable multimedia controller 100 may receive user-input via one or more remote control units, for example, wall-mounted control units, table-top control units, hand-held portable control units, and the like. In some cases, a remote control unit may be coupled to the programmable multimedia controller 100 via an intermediate device 153. In other cases, the remote control unit may communicate directly with the multimedia controller 100. Depending on the mode of communication of the remote control unit, the need for, and the form of, the intermediate device 153 may vary. For example, if the remote control unit uses a wireless local area network (LAN) connection (such as a WI-FI or IEEE 802.11 connection), the intermediate device 153 may be a wireless access point or other gateway Alternatively, if the remote control unit uses a wired LAN connection (such as an Ethernet connection), the intermediate device 153 may be an switch or router. In still another alternative, if the remote control unit communicates over a wide area network (WAN) (such as the Internet) to contact the programmable multimedia controller 100, the intermediate device 153 may be an interface to a WAN, such as a cable modem or digital subscriber line (DSL) modem.

One particular type of remote control unit shall be referred to herein as a "mobile device" 150. As used herein, the term "mobile device" refers to an electronic device that is adapted to be transported on one's person, including multimedia smartphones, such as the iPhone® multimedia phone available from Apple Inc. and the Blackberry® device available from Research In Motion Limited, multi-purposes tablet computing devices, such as the iPad® tablet available from Apple Inc., portable media players, such as the iPod® touch available from Apple Inc., personal digital assistants (PDAs), electronic book readers, and the like. Such mobile devices 150 may communicate directly with the programmable multimedia controller 100, or indirectly with the programmable multimedia controller 100 through the intermediate device 153, using various wireless networking techniques, cellular networking technique, and/or wired networks.

In response to user-input from a mobile device 150, the programmable multimedia controller 100 may switch data between, issue control commands to, and/or otherwise interoperate with, the audio source devices 110, the video source devices 120, the audio output devices 130, and/or the video output devices 140. Further, in response to the user-input, the programmable multimedia controller 100 may issue control commands to, and otherwise interoperate with, the CCTV control system 170, the HVAC control and/or energy management system 175, the security system 180, the electronic lighting controllers 190, as well as the motor operated device controllers 195.

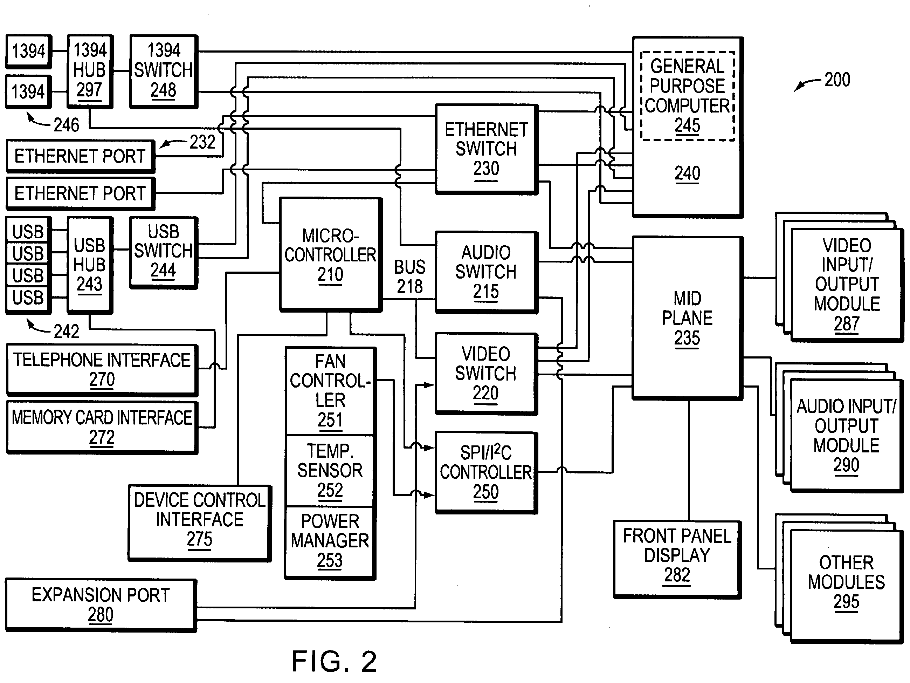

Fig. 2 is a schematic block diagram of an example hardware architecture 200 of the example programmable multimedia controller 100. The various components shown may be arranged on a "motherboard" of the controller 100, or on a plurality of circuit cards interconnected by a backplane (not shown). A microcontroller 210 manages the general operation of the controller 100. The microcontroller 210 is coupled to an audio switch 215 and a video switch 220 via a bus 218. The audio switch 215 and the video switch 220 are preferably crosspoint switches capable of switching a number of connections simultaneously. However, many other types of switches capable of switching digital signals may be employed, for example, Time Division Multiplexing (TDM) switches or other devices. Further, while two separate switches 215, 220 are shown, audio and video switching may be consolidated into a single switch that supports switching of both types of data.

A mid plane 235 interconnects the audio and video switches 215, 220 to a variety of input and output modules, for example, one or more Video Input/Output Modules 287, one or more Audio Input/Output Modules 290, and/or one or more other modules 295. Such modules may include a plural of connection ports that may be coupled to A/V devices. The mid plane 235 is further coupled to an Ethernet switch 230 that interconnects Ethernet ports 232 and a processing subsystem 240 to the microcontroller 210. In one embodiment, the processing subsystem 240 includes one or more "general-purpose computers" 245. A general-purpose computer 245, as used herein, refers to a device that is configured to execute a set of instructions, and depending upon the particular instructions executed, may perform a variety of different functions or tasks. Typically, but not always, a general-purpose computer 245 executes a general-purpose operating system, such as the Windows® operating system, available from Microsoft Corporation, the Linux® operating system, available from a variety of vendors, the OSX® operating system, available from Apple Inc., or another operating system. The general-purpose computer 245 may include a computer-readable medium, for example, a hard drive, a Compact Disc read-only memory (CDROM) drive, a Flash memory, or other type of storage device, and/or may be interconnected to a storage device provided elsewhere in the processing subsystem 240.

The processing subsystem 240 preferably has one or more graphics outputs 241, 242 such as analog Video Graphics Array (VGA) connectors, Digital Visual Interface (DVI) connectors, Apple Display Connector (ADC) connectors, or other type of connectors, for supplying graphics. Such graphics outputs 241, 242 may, for example, be supplied directly from the one or more general-purpose computers 245 of the processing subsystem 240.

The example programmable multimedia controller 100 may also include a memory card interface and a number of Universal Serial Bus (USB) ports 242 interconnected to a USB hub 243. Such USB ports 242 may be couple to external devices. A USB switch 244 is employed to switch USB signals received at the hub to the processing subsystem 240. In a similar manner, a number of IEEE 1394 (FireWire™) ports 246 may be coupled to external devices and pass data to an IEEE 1394 hub 247 and to an IEEE 1394 switch 248, for switching to the processing subsystem 240.

The microcontroller 210 is further connected to a Serial Peripheral Interface (SPI) and Inter-Integrated Circuit (I²C) distribution circuit 250, which provides a serial communication interface to relatively low data transfer rate devices. The SPI/ I²C controller 250 is connected to the mid plane 235 and thereby provides control commands from the microcontroller 210 to the modules 287, 290, 295 of the programmable multimedia controller 100. Further, connections from the SPI/ I²C controller 250 are provided to components such as a fan controller 251, a temperature sensor 252, and a power manager circuit 253, which collectively manage the thermal characteristics of the programmable multimedia controller 100.

The microcontroller 210 is also connected to a device control interface 275 that may communicate with the CCTV control system 170, the HVAC control and/or energy management system 175, the security system 180, the one or more electronic lighting controllers 190 as well as the one or more motor operated device controllers 195. Further, a telephone interface 270 may be provided to connect to a telephone network and/or telephone handsets. In addition, an expansion port 280 may be provided for linking several programmable multimedia controllers 100 together, to form an expanded system, while a front panel display 265, may be provided to display status, configuration, and/or other information to a user.

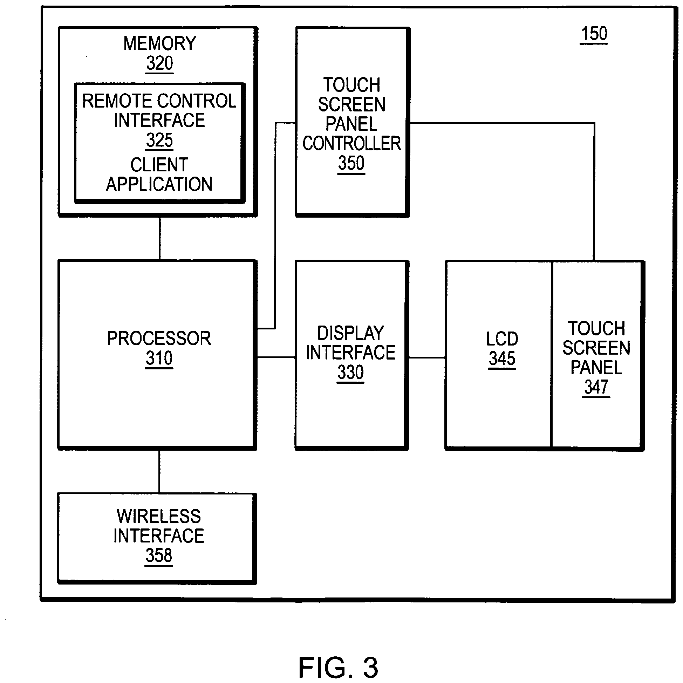

Fig. 3 is block diagram of an example hardware architecture of an example mobile device 150, which may operate with the programmable multimedia controller 100 of Fig. 1. The mobile device 150 includes a processor 310, coupled to a memory 320. The memory 320 may contain both persistent and volatile storage portions, which store processor-executable instruction for one or more software applications for execution on the processor 320. A remote control interface client application 325 may be stored in the memory 320 and include instructions for execution on the processor 310 for implementing at least a part of the below described techniques. The processor 310 may further be coupled to display interface 330 the visually renders graphics for display on a touch screen display. The touch screen display may include both a display screen, such a liquid crystal display (LCD) 345, and a touch screen panel 347, overlaid upon the display screen, that receives and registers touches from a user. Such touch information may be interpreted by a touch screen panel controller 350 and supplied to the processor 310, for use with the techniques described herein. Further, an interface 360, that may include a wireless network transceiver (such as WI-FI or IEEE 802.11 transceiver), a cellular network interface (such as CDMA or GSM transceiver) and/or other types of wireless or wired transceiver(s), may be coupled to the processor 310 and facilitate communication directly, or indirectly, with the programmable multimedia control 100.

According to one embodiment of the present disclosure, a remote control interface is provided that allows a user to interact with, and otherwise control, a programmable multimedia controller 100 from a mobile device 150 having a touch screen display, in a largely "head-up" manner, while providing visual feedback on the mobile device 150 to confirm touch input. A remote control interface client application 325 executing on the mobile device 150 may display an input interface on the touch screen display. The user may enter touch input, including taps, holds and gestures, such as swipes or pans, on the touch screen display. Such touch input may be processed and communicated to the programmable multimedia controller 100, which displays an on-screen display menu system on a display device, such as a television coupled to the programmable multimedia controller 100. The user may direct the majority of his or her attention to the on-screen display menu system on the display device 140, rather than the touch screen display on the mobile device 150. In response to touch input, including taps, holds and gestures, such as swipes or pans, the control interface client application 325 may communicate appropriate commands to the programmable multimedia control 100 to cause it to display and manipulate the on-screen display menu system on the display device 140, and register selections therein. Further, the control interface client application 325 may cause the display of visual feedback on the touch screen display of the mobile device 150 that is specific to the type of touch input received on the touch screen display. This visual feedback may differentiate, for example, between taps, holds and gestures, such as swipes or pans, and between gestures in different directions (e.g., left, right, up down), and provide a different visual indication in response to each type of touch input. Such visual feedback may be provided while the input is in progress, and/or shortly after it is completed.

As used herein, the term "tap" refers to momentary touch at a stationary position, such that a touch and a release occur within a predetermined period of time. As used herein, the term "hold" refers to an extended touch at a stationary position, such that a touch occurs, time elapses, and a release occurs, where the length of the elapse of time is longer than a predetermined period of time. As used herein, the term "swipe" refers to a rapid movement of a touch from a starting position, in a direction (e.g., left, right, up, down), to an ending position, where the movement occurs at greater than a predetermined velocity. As used herein, the term "pan" refers to a slow movement of a touch from a starting position, over a distance in a direction (e.g., left, right, up, down), to an ending position, where the movement occurs over greater than a predetermined distance.

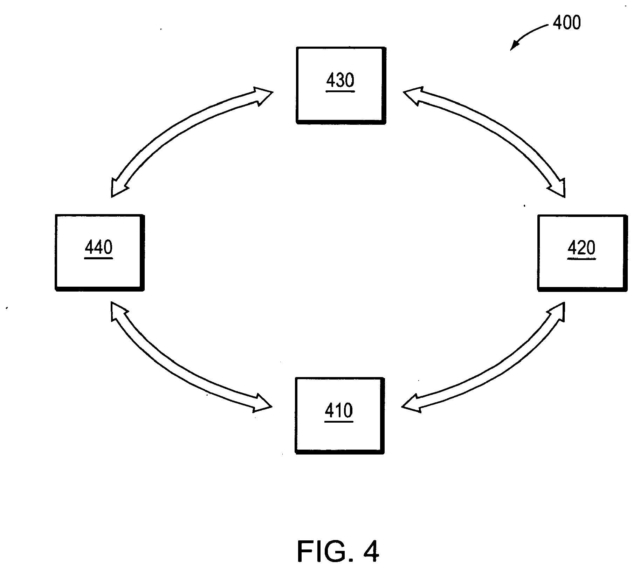

Fig. 4 is a diagram of an example on-screen display menu system 400 of remote control interface that may be displayed on a display device 140 coupled to the programmable multimedia controller 100. The on-screen display menu system 400 may be rendered by a software application executing on the processing subsystem 240 of the programmable multimedia controller 100, or another device. The on-screen display menu system 400 is composed of a plurality of selectable options 410, 420, 430, 440 displayed in an annular configuration. While only four selectable options are shown in Fig. 4, any number of selectable options may be provided. The on-screen display menu system 400 may be two-dimensional, with the selectable options 410, 420, 430, 440 arranged in a plane parallel to display screen, or may be three-dimensional, such that the selectable options 410, 420, 430, 440 are arranged in an annular pattern in three-dimensional space, and an image of the three-dimensional space is displayed to the user. Similarly, the selectable options themselves 410, 420, 430, 440 may be two or three-dimensional representations. In one embodiment, the selectable options 410, 420, 430, 440 are graphic icons, whose appearances is related to, or otherwise associated with, their respective functions. For example, the selectable options 410, 420, 430, 440 may be graphic icons representing the devices controlled by the programmable multimedia controller 100, and their selection may be used to indicate one of the devices for further control. If one of the devices is selected for further control by selection of an appropriate selectable option, further selectable options (not shown) may be displayed for interacting with the selected device. For example, if the selected device is a cable television source, such as a cable box, further selectable options may correspond to listings in a television guide available in connection with the cable television source. Similarly, if the selected device is a HVAC device, further selectable options may correspond to heating and cooling points and controls. It should be understood that selection of a selectable option may trigger the display of a subsequent level of selectable options, and these selectable options also may trigger the display of a subsequent level in a wide variety of nested configurations.

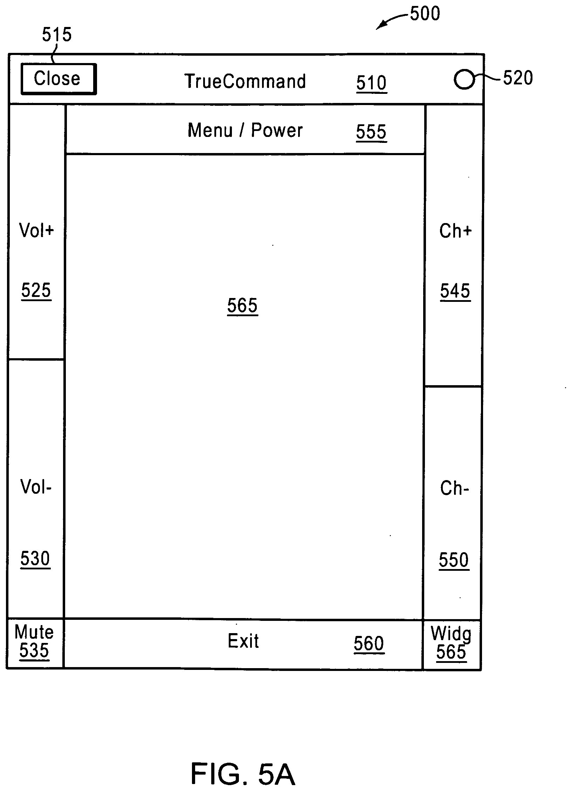

To select the different selectable options 410, 420, 430, 440, and make other control selections, a user interacts with the mobile device 150 and the touch screen display thereof. Fig. 5A is a screen shot of an example input interface 500 that may be shown on the touch screen display of a mobile device 150. The input interface 500 may be rendered by remote control interface client application 325 executing on the processor 310 of the mobile device 150. A title bar 510 may include a virtual button 515 for closing the remote control interface client application 325, as well as a connectivity indicator 520 that may indicate, for example, by displaying a predetermined color, when there is connectivity to the programmable multimedia controller 100. A plurality of additional virtual buttons may be provided in the input interface that are assigned predefined and/or context sensitive functions, including a volume increase button 525, a volume decrease button 530, a mute button 535, a channel increment button 545, a channel decrement button 550, a menu/power button 555 (that may trigger the display of the on-screen display menu system depicted in Fig. 4) and an exit button 560 (that may cause the on-screen display menu system depicted in Fig. 4 to be hidden, or a sub-menu thereof to be stepped out of). Further, a widgets button 565 may cause the display of one or more widgets or other small applications on the display device 140 coupled to the programmable multimedia controller 100. The remainder of the input interface 500 may be devoted to a gesture field 565, where a user may enter touch input, including taps, holds and gestures, such as swipes or pans. In some embodiments, these gestures need not be strictly confined to the gesture field 565, and may extend over one or more of the virtual buttons 525-565. The virtual buttons 525-565 may be configured to only accept input if no gesture has been detected.

According to one embodiment of the remote control interface techniques described herein, a user may enter a gesture, such a swipe or pan, by sliding his or her finger in a vertical or horizontal direction. In response thereto, the selectable options 410, 420, 430, 440 may be manipulated (e.g., rotated) in the on-screen display menu system 400 shown on a display device 140 coupled to the programmable multimedia controller 100. For example, referring to Fig. 4, selectable option 420 may rotate into the position now-occupied by selectable option 410, in response to a right-wards swipe or pan by the user. A user may select a selectable option 410, 420, 430, 440 by bringing the option to a designated location in the on-screen display menu system 400, for example, to the foreground location of a three-dimensional annular menu system, or the bottom location of a two-dimensional annular menu system. Once at the designated location, the user selects the selectable option with a tap or a hold on any location in the gesture field 565.

As discussed above, the remote control interface may provide visual feedback on the touch screen display of the mobile device 150 that is specific to the type of touch input (e.g., tap, hold, swipe or pan) that is being, or has been, received in the input interface on the touch screen display. This visual feedback may differentiate, for example, between a tap, a hold, a swipe, and a pan, and between different directions of swipes and pans. Visual feedback may also be provided when a virtual button is tapped or held.

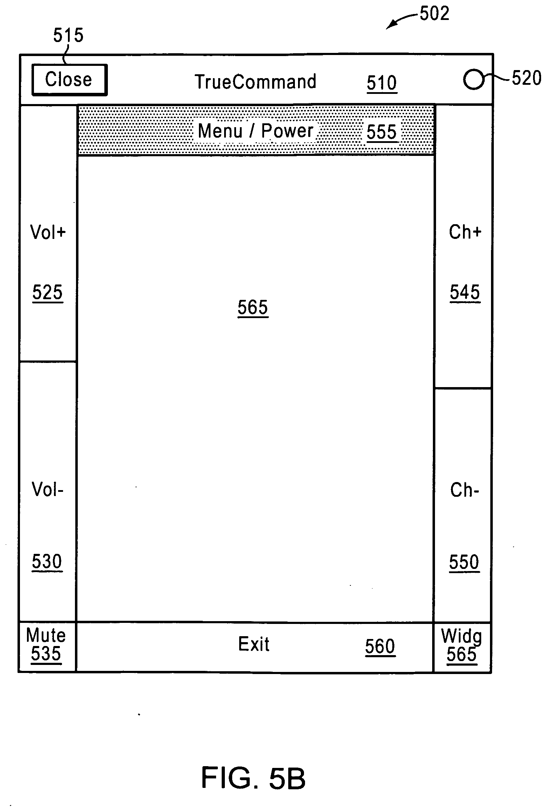

Fig. 5B is a screen shot of an example input interface 502 illustrating visual feedback provided in response to a virtual button tap or hold, which may be shown on the touch screen display of a mobile device 150. In one example, the menu/power button 555 has been tapped and is shown highlighted, with a predetermined color or pattern, for a brief predetermined period of time thereafter. If the menu/power button 555 is alternatively held, the button may remain highlighted for the duration the button is held.

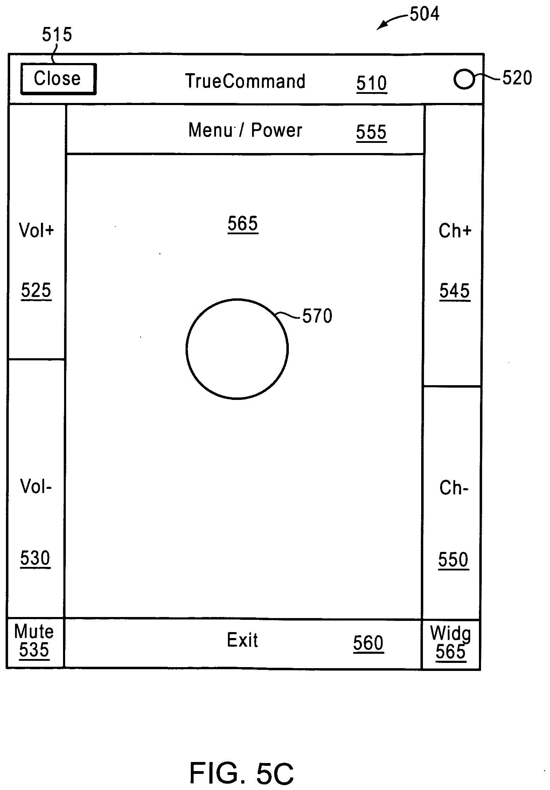

Fig. 5C is a screen shot of an example input interface 504 illustrating visual feedback provided in response to a tap or hold in the gesture field 565, that may be shown on the touch screen display of a mobile device 150. In one example, a user has tapped proximate to the center of the gesture field 565. An indicator 570 may be displayed about the location of the tap for a brief predetermined period of time after the tap. In one configuration, the indicator is a circular animation in a predetermined color that is shown radiating out from the location of the tap. However, it should be understood that the indicator 570 may have a different visual appearance. Should the user hold the touch screen display, as opposed to releasing it rapidly in a tap, the indicator 570 may be displayed shortly after the touch screen display is initially pressed and may remain visible for the duration that the touch screen display is held. The tap, or alternatively, a hold, on the touch screen may cause the selection of a particular selectable option 410, 420, 430, 440 that is located at a designated location in the on-screen display menu system 400, or cause other action to be taken.

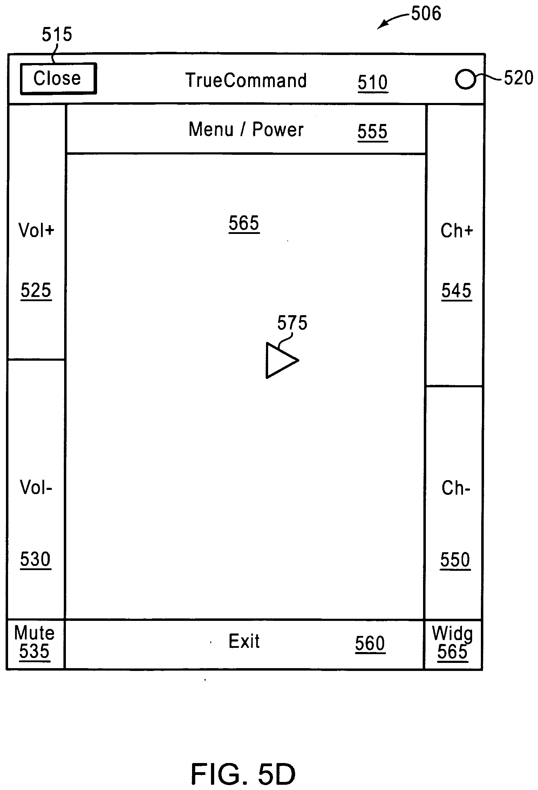

Fig. 5D is a screen shot of an example input interface 506 illustrating visual feedback provided in response to a potential pan, which may be shown on the touch screen display of a mobile device 150. In this example, a user has begun a slow movement of a touch from a starting position located proximate the center of the gesture field 565 in a rightwards direction, however such movement may begin from a position anywhere on the touch screen display other than the title bar 510, including over a virtual button 525-565. As soon as the user begins this gesture, one or more directional indicators 575 (e.g., an arrow) may be displayed. The directional indicators may be of a predetermined color or be shaded with a predetermined pattern. In one embodiment, the greater the distance of the movement, the greater the number of directional indicators 575 shown. For example, if the user continues to move in a rightwards direction, a second directional indicator (not shown) may be displayed, then a third directional indicator (not shown), etc. Once the user has traversed greater than a predetermined distance, the potential pan may be registered as an actual ongoing pan, and the on-screen display menu system 400 may be updated, for example, selectable option 410, 420, 430, 440 in the on-screen display menu system 400 may be rotated, or other action taken.

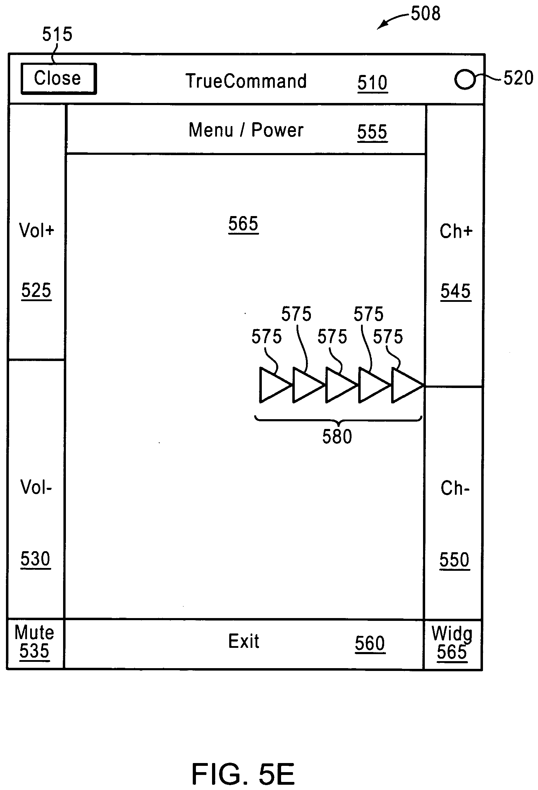

Fig. 5E is a screen shot of an example input interface 508 illustrating visual feedback provided in response to an ongoing pan or a swipe in the gesture filed 565, which may be shown on the touch screen display of a mobile device 150. In this example, a user has registered an ongoing pan by slowly moving at least the predetermined distance in a rightwards direction and holding at the end of the movement, or has entered a swipe by rapidly moving in a rightwards direction from a starting position to an ending position. As discussed above, while in this example, the movement is shown beginning from a starting position proximate the center of the gesture field 565, such movement may begin from a position anywhere on the touch screen display other than the title bar 510, including over a virtual button 525-565. A plurality 580 of directional indicators 575 (e.g., arrows) may be displayed. Such plurality 580 of directional indicators 575 may be displayed while the pan is ongoing, or in the case of a swipe, for a brief predetermined period of time thereafter. As discussed above, in response to a pan, the on-screen display menu system 400 may be updated, for example, selectable options 410, 420, 430, 440 in the on-screen display menu system 400 may be rotated, or other action taken. Similarly, in response to a swipe, the on-screen display menu system 400 may be updated, for example, selectable options 410, 420, 430, 440 may be advanced by one unit in the direction of the swipe.

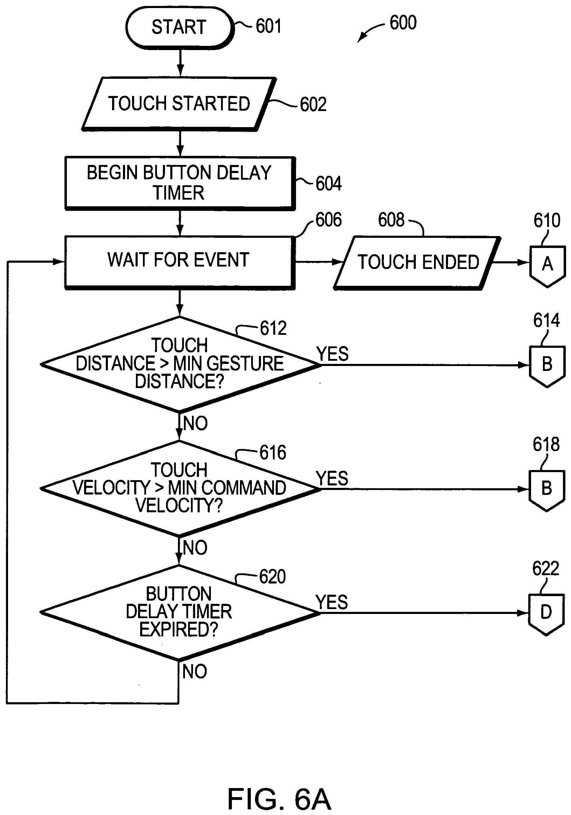

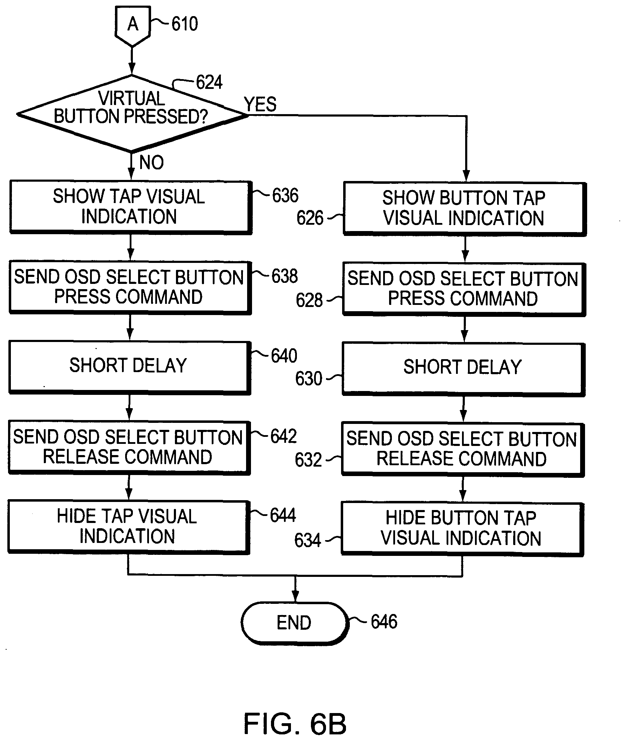

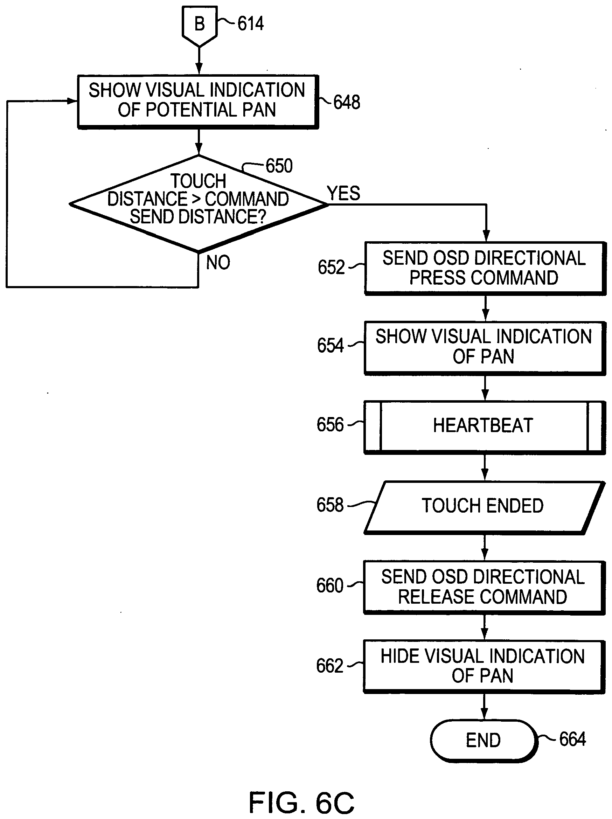

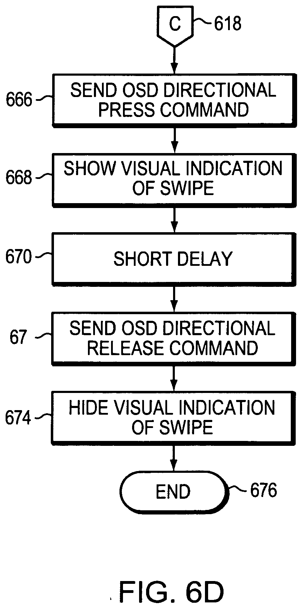

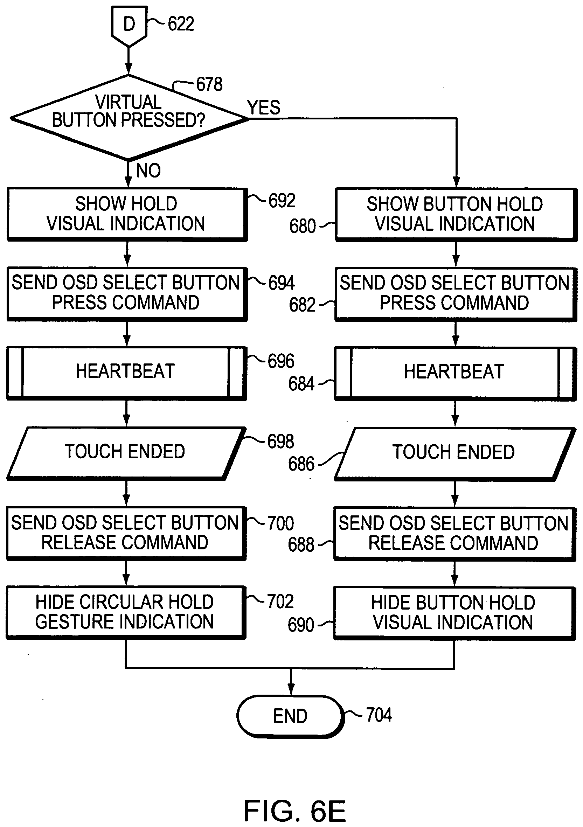

Fig. 6A is a flow chart of an example sequence of steps 600 that may be implemented by the remote control interface client application 325, to interoperate with a programmable multimedia controller 100, to provide a remote control interface. The sequence starts at step 601, where the remote control interface client application 325 is executed by the processor 310 of the mobile device 150, and an input interface, for example, as shown above in Fig. 5A, is displayed on the touch screen display of the mobile device 150. At step 602, touch input is detected upon the touch screen display. At step 604, a button delay timer is initiated, and execution proceeds step 606, where the application 325 waits for one of several possible events to occur. A first possibility is that, absent any other event occurring, the end of touch input is detected, at step 608. In such case, execution proceeds, via connector 610 to Fig. 6B, where a determination is made whether a virtual button has been tapped or a tap has been received in the gesture field 565, and an appropriate response is taken. A second possibility, which is checked for at step 612, is that the touch moves slowly over a distance, where the movement occurs over greater than a predetermined minimum gesture distance. In such case, execution proceeds, via connector 614, to Fig. 6C, where a determination is made whether a potential pan is completed to become an actual ongoing pan, and an appropriate response is taken. A third possibility, which-is checked for at step 616, is that the touch moves rapidly over a distance, where the movement occurs at greater than a predetermined minimum command velocity gesture distance. In such case, execution proceeds, via connector 618, to Fig. 6D, where a swipe is registered, and an appropriate response is taken. A fourth possibility, which is checked for at step 620, is that the button delay timer expires absent one of the other events occurring. In such case, execution proceeds, via connector 622, to Fig. 6E, where a determination is made whether a virtual button has been held, or a hold has been received in the gesture field 565, and an appropriate response is taken. Otherwise execution loops to step 606.

Fig. 6B is a flow chart of an example sequence of steps that may be implemented by the remote control interface client application 325, to determine if a virtual button has been tapped or a tap has been received in the gesture field 565, and to take an appropriate response. At step 624, it is determined if the location of the tap upon the touch screen display coincides with the location of a virtual button. If so, execution proceeds to step 626, where a button tap visual indication is shown, for example, the button is highlighted, with a predetermined color or pattern, as in Fig. 5B. At step 628, the control interface client application 325 sends an appropriate on-screen display select button press command to the programmable multimedia controller 100, to cause an action corresponding to the virtual button to be executed. At step 630, the control interface client application 325 waits for a brief predetermined delay. Thereafter, at step 632, the control interface client application 325 sends an appropriate on-screen display select button release command to the programmable multimedia controller 100, and, at step 634, the visual indication is hidden, for example, the highlighting is removed. The sequence then ends at step 646.

Alternatively, if at step 624, it is determined that the location of the tap does not coincide with the location of a virtual button, for example, it is in the gesture field 565, execution proceed to step 626, where a tap visual indication is shown, for example, an indicator 570 may be displayed about the location of the tap, such as is shown in Fig. 5C. At step 638, the control interface client application 325 sends an appropriate on-screen display select button press command to the programmable multimedia controller 100, to cause a selection to be made, for example, a selection of a particular selectable option 410, 420, 430, 440 that is located at a designated location in the on-screen display menu system 400. At step 640, the control interface client application 325 waits for a brief predetermined delay. Thereafter, at step 642, the control interface client application 325 sends an appropriate on-screen display select button release command to the programmable multimedia controller 100, and at step 644, the tap visual indication is hidden, for example, the indicator 570 is removed. The sequence then ends at step 646.

Fig. 6C is a flow chart of an example sequence of steps that may be implemented by the remote control interface client application 325, to determine whether a potential pan is completed to become an actual ongoing pan, and to take an appropriate response. At step 648, a visual indication of a potential pan, such as one or more directional indicator 575 (e.g., an arrow) is displayed on the touch screen display of the mobile device 150, pointing in the direction of the potential pan, as shown in Fig. 5D. At step 650, a determination is made whether the touch traversed a predetermined command send distance, and thus whether an actual pan is ongoing. If not, execution loops to step 648, unless another event is detected (not shown). If so, execution proceeds to step 652, where the control interface client application 325 sends an appropriate on-screen display directional press command to the programmable multimedia controller 100, for example, such that selectable options 410, 420, 430, 440 in the on-screen display menu system 400 may be rotated for the duration of the pan, or other action taken. At step 654, a visual indication of an ongoing pan is displayed, such as a plurality 580 of directional indicators 575 (e.g., arrows) as shown in Fig. 5E. At step 656, heartbeat indicators are generated and sent, as discussed in more detail below. At step 658, an end of touch input is detected. Execution then proceeds to step 660, where the control interface client application 325 sends an appropriate on-screen display directional release command to the programmable multimedia controller 100, and to step 662, where the visual indication of the pan is hidden. The sequence of steps ends at step 664.

Fig. 6D is a flow chart of an example sequence of steps that may be implemented by the remote control interface client application 325, to register a swipe and take an appropriate response. At step 666, the control interface client application 325 sends an appropriate on-screen display directional press command to the programmable multimedia controller 100, for example, such that selectable options 410, 420, 430, 440 in the on-screen display menu system 400 may be rotated by one increment, or other action taken. At step 668, a visual indication of a swipe in the direction of the swipe is displayed on the touch screen display of the mobile device 150. The visual indication of the swipe may be the same as the visual indication of a pan, for example, a plurality 580 of directional indicators 575 (e.g., arrows), as shown in Fig. 5E, or may have a different visual appearance. At step 670, the remote control interface client application 325 waits a brief predetermined period of time, and then, at step 672, sends an appropriate on-screen display directional release command to the programmable multimedia controller 100. Thereafter, at step 674, the visual indication of the swipe is hidden and, at step 676, the sequence of steps ends.

Fig. 6E is a flow chart of an example sequence of steps that may be implemented by the remote control interface client application 325, to determine if a virtual button has been held or a hold has been received in the gesture field 565, and to take an appropriate response. At step 678, it is determined if the location of the hold upon the touch screen display coincides with the location of a virtual button. If so, execution proceeds to step 680, where a button hold visual indication is shown, for example, the button is highlighted, with a predetermined color or pattern, as in Fig. 5B. At step 682, the control interface client application 325 sends an appropriate on-screen display select button press command to the programmable multimedia controller 100, to cause an action corresponding to the virtual button to be executed. At step 684, heartbeat indicators are generated and sent, as discussed in more detail below. At step 686, the control interface client application 325 detects the touch has ended upon the touch screen display. Thereafter, at step 688, the control interface client application 325 sends an appropriate on-screen display select button release command to the programmable multimedia controller 100, and, at step 690, the button hold visual indication is hidden, for example, the highlighting is removed. The sequence then ends at step 704.

Alternatively, if at step 678, it is determined that the location of the hold does not coincide with the location of a virtual button, for example, it is in the gesture filed 565, execution proceeds to step 692, where a hold visual indication is shown, for example, an indicator 570 may be displayed about the location of the hold, such as is shown in Fig. 5C. At step 692, the control interface client application 325 sends an appropriate on-screen display select button press command to the programmable multimedia controller 100, to cause an action corresponding to the hold to be executed. For example, a selection may be made of a particular selectable option 410, 420, 430, 440 that is located at a designated location in the on-screen display menu system 400. At step 696, heartbeat indicators are generated and sent, as discussed in more detail below. At step 698, the control interface client application 325 detects the touch has ended upon the touch screen display. Thereafter, at step 700, the control interface client application 325 sends an appropriate on-screen display select button release command to the programmable multimedia controller 100, and at step 704, the hold visual indication is hidden, for example, the indicator 570 is removed. The sequence then ends at step 704.

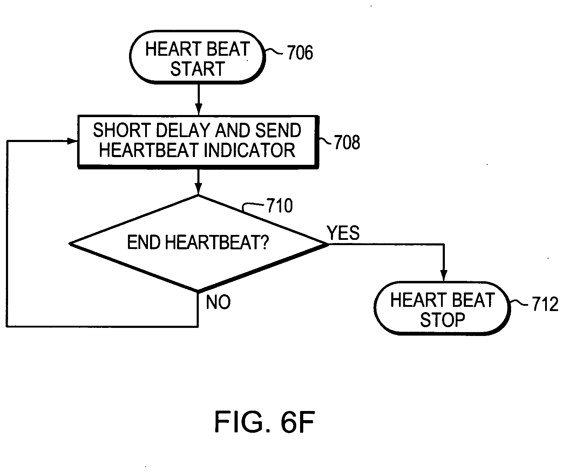

Fig. 6F is a flow chart of an example sequence of steps that may be implemented by the remote control interface client application 325, to implement a heartbeat indicator. Absence of a heartbeat indicator being received at the programmable multimedia controller 100 after the elapse of a certain period of time causes the programmable multimedia controller 100 to emulate a button release. The heartbeat indicator operates to prevent a situation where a release event is missed at the programmable multimedia controller 100, for example, due to a connectivity failure between the mobile device 150 and the programmable multimedia controller 100, and the programmable multimedia controller 100 continues to believe a button is being pressed. At step 706, heartbeat indicator generation is started start on the mobile device 150, for example, in response to a touch. At step 708, a delay period is waited for, and a heartbeat indicator is generated and sent to the programmable multimedia controller 100. At step 710, a check is performed to determine if heart beat indication generation can end, for example, if the touch has been released. If not, execution loops to 708. If so, execution proceeds to step 712, where heartbeat indicator generation is ended.

While the above description discusses certain embodiments of the present disclosure, it should be apparent that further modifications and/or additions may be made without departing from the disclosure's intended spirit and scope. While it is described above that touch input (e.g., taps, holds, swipes and pans) may be used to manipulate and select selectable options in a variety of on-screen display menu systems 400, such touch input may alternatively be used to directly control the programmable multimedia controller 100, or a device coupled thereto, absent the coinciding display of an on-screen menu. For example, when the programmable multimedia controller 100, or a device coupled thereto, is in a particular mode, a certain type of touch input (e.g., a tap, a hold, a swipe or a pan) may have a predetermined meaning that may be implemented upon its detection. For example, in one embodiment, if a television is being controlled, an upwards pan may have a predetermined meaning that volume should be raised, and upon detection of such upwards pan, such action may be taken. Accordingly, control need not always be linked to the display of an on-screen display menu systems 400.

Further, while the above description refers to a variety of specific hardware units for executing various functions, it should be remembered that many of the techniques discussed herein may alternately be implemented by a variety of different hardware structures (for example a variety of different programmable logic circuits, specially-designed hardware chips, analog or partially-analog devices, and other types of devices), may be implemented in software (for example as computer-executable instructions stored in a non-transitory computer-readable storage media for execution on a processor or other hardware device), or may be implemented in a combination of hardware and software. Accordingly, it should be remembered that the above descriptions are meant to be taken only by way of example. The scope of the invention is defined by the appended claims.

## Claims

1. A system comprising:
a programmable multimedia controller coupled to, and configured to control a plurality of different types of electronic devices, the programmable multimedia controller configured to display an on-screen display menu system on at least one of the display devices, the on-screen display menu system including a plurality of selectable options that are rotatable in the on-screen display menu system and selectable from the on-screen display menu system in response to control commands;
a mobile device separate from the programmable multimedia controller and from the at least one display device, the mobile device configured to operate as a remote control for the programmable multimedia controller through which control commands for interacting with the on-screen display may be entered, the mobile device including a wireless interface that enables wireless communication with the programmable multimedia controller, a touch screen display, a processor, and a memory configured to store at least a remote control interface client application that when executed by the processor is operable to:
display an input interface on the touch screen display, the input interface having a gesture field,
detect a gesture from a user in the gesture field on the mobile device, determine a type and a direction of the gesture from among a plurality of types and directions of possible gestures,
in response to the gesture, send one or more control commands to the programmable multimedia controller to cause the programmable multimedia controller to rotate the options in the on-screen display menu system displayed on the at least one display device according to the type of the gesture and in the direction, to bring an option to a designated location in the on-screen display menu system where the option may be selected, **characterized in** being further operable to: in response to the gesture, display one or more indicators in the gesture field to provide visual feedback to the user on the mobile device that is specific to both the type and the direction of the gesture, the provided visual feedback to differ for different types and different directions of the plurality of possible types and directions of gestures.

2. The system of claim 1, wherein the input interface further includes a plurality of virtual buttons separate from the gesture field, and the remote control interface client application when executed is further operable to:
detect additional touch input from the user having a location that coincides with a location of a virtual button,
in response to the additional touch input, send one or more control commands to the programmable multimedia controller to cause the programmable multimedia controller to perform an action corresponding to the virtual button, and
in response to the additional touch input, display a visual indication on the touch screen of the mobile device to provide visual feedback to the user that the virtual button was pressed.

3. The system of claim 1, wherein the type of the gesture is a potential pan and the indicator is one or more directional indictors that indicate a direction of the potential pan.

4. The system of claim 1, wherein the type of the gesture is an ongoing pan and the indicator is a plurality of directional indictors that indicate a direction of the ongoing pan and that remain visible for a duration of the ongoing pan.

5. The system of claim 1, wherein the type of the gesture is a swipe and the indicator is a plurality of directional indictors that indicate a direction of the swipe.

6. The system of claim 1, wherein the mobile device is a smartphone and the display device is a television.

7. A method comprising:
causing an on-screen display menu system to be displayed on a television, the menu system including a plurality of selectable options that may be manipulated in the on-screen display menu system and may be selected from the on-screen display menu system in response to control commands;
displaying an input interface on a touch screen display of a mobile device that is separate from the television, the input interface having a gesture field;
detecting a gesture from a user in the gesture field on the mobile device;
determining a type and a direction of the gesture from among a plurality of types of possible gestures;
in response to the gesture, sending one or more control commands to manipulate one of the options in the on-screen display menu system displayed on the television according to the type and the direction of the gesture, to bring an option to a designated location in the on-screen display menu system where the option may be selected; **characterized in**: in response to the gesture, displaying one or more indicators in the gesture field to provide visual feedback to the user on the mobile device that is specific to the type and direction of the gesture, the provided visual feedback to differentiate between gestures of different types and different directions.

8. The method of claim 7, wherein the input interface further includes a plurality of virtual buttons separate from the gesture field, and the method further comprises:
detecting additional touch input from the user having a location that coincides with a location of a virtual button;
in response to the additional touch input, sending one or more control commands to perform an action corresponding to the virtual button; and
in response to the touch input, displaying a visual indication on the touch screen of the mobile device to provide visual feedback to the user that the virtual button was pressed.

9. The method of claim 7, wherein the type of the received input is a potential pan.

10. The method of claim 7, wherein the type of the received input is an ongoing pan

11. The method of claim 7, wherein the type of the received input is a swipe.

12. The method of claim 7, wherein the displaying an on-screen display menu system on the television is performed by a programmable multimedia controller coupled to the television, the programmable multimedia controller configured to control a plurality of different types of electronic devices including one or more audio source devices, one or more video source devices, one or more audio destination devices and one or more display devices other than the television, wherein the mobile device is in wireless communication with the programmable multimedia controller.

13. A non-transitory computer readable media storing executable instructions that when executed by a processor are operable to:
cause an on-screen display menu system to be displayed on a display device, the on-screen display menu system including a plurality of options that may be selected from the on-screen display menu system;
display an input interface on a touch screen display of a mobile device, the input interface having one or more virtual buttons and a gesture field;
detect touch input from the user in the input interface having a location that coincides with a location of a virtual button;
in response to the touch input, cause an action corresponding to the virtual button to be performed by a programmable multimedia controller coupled to the display device;
in response to the touch input, display a visual indication on the touch screen of the mobile device to provide visual feedback to the user that the virtual button was pressed;
detect a gesture from a user in the gesture field on the mobile device;
determine a type and a direction of the gesture from among a plurality of types and directions of possible gestures;
in response to the gesture, cause one of the options in the on-screen display menu system that is displayed on the display device to be manipulated in the on-screen display menu system according to the type of the gesture and in the direction, to bring an option to a designated location in the on-screen display menu system where the option may be selected; **characterized in** being further operable to: in response to the gesture, display one or more indicators in the gesture field to provide visual feedback to the user on the mobile device that is specific to the type and the direction of the gesture, the provided visual feedback to differentiate between gestures of different types and different directions.

## Patentansprüche

1. System, umfassend:
eine programmierbare Multimediasteuereinheit, die mit einer Vielzahl von unterschiedlichen Typen elektronischer Geräte gekoppelt und zum Steuern derselben gestaltet ist,
wobei die programmierbare Multimediasteuereinheit gestaltet ist, ein Bildschirmmenüanzeigesystem auf mindestens einem der Anzeigegeräte darzustellen, das Bildschirmmenüanzeigesystem eine Vielzahl wählbarer Optionen umfasst, die in dem Bildschirmmenüanzeigesystem als Reaktion auf Steuerbefehle drehbar sind und von dem Bildschirmmenüanzeigesystem auswählbar sind;
ein Mobilgerät, getrennt von der programmierbaren Multimediasteuereinheit und von dem mindestens einen Anzeigegerät, wobei das Mobilgerät gestaltet ist, wie eine Fernsteuerung für die programmierbare Multimediasteuereinheit betrieben zu werden, durch welches Steuerbefehle zur Interaktion mit der Bildschirmanzeige eingegeben werden können, das Mobilgerät eine drahtlose Schnittstelle enthält, die drahtlose Kommunikation mit der programmierbaren Multimediasteuereinheit ermöglicht, eine Tastbildschirmanzeige, einen Prozessor und einen Speicher, der gestaltet ist zum Speichern von mindestens einer Fernsteuerungsschnittstellen-Kundenanwendung, die bei Ausführung durch den Prozessor funktionsfähig ist, um:
eine Eingabeschnittstelle auf der Tastbildschirmanzeige darzustellen, wobei die Eingabeschnittstelle ein Gestenfeld aufweist,
eine Geste von einem Benutzer im Gestenfeld auf dem Mobilgerät zu erkennen,
eine Art und eine Richtung der Geste aus der Vielzahl von Arten und Richtungen möglicher Gesten zu bestimmen,
als Reaktion auf die Geste einen oder mehrere Steuerbefehle an die programmierbare Multimediasteuereinheit zu senden, um zu bewirken,
dass die programmierbare Multimediasteuereinheit die Optionen in dem auf dem mindestens einen Anzeigegerät dargestellten
Bildschirmanzeigemenüsystem entsprechend der Art der Geste und in der Richtung dreht, um eine Option an eine bezeichnete Stelle im Bildschirmanzeigemenüsystem zu bringen, wobei die Option ausgewählt werden kann,
**dadurch gekennzeichnet, dass** sie des Weiteren funktionsfähig ist, um:
als Reaktion auf die Geste einen oder mehrere Indikatoren im Gestenfeld anzuzeigen, so dass dem Benutzer auf dem Mobilgerät ein visuelles Feedback bereitgestellt wird, das sowohl für die Art als auch die Richtung der Geste spezifisch ist, das visuelle Feedback für verschiedene Arten und unterschiedliche Richtungen der Vielzahl möglicher Arten und Richtungen von Gesten abweicht.

2. System nach Anspruch 1, wobei die Eingabeschnittstelle des Weiteren eine Vielzahl virtueller Knöpfe getrennt von dem Gestenfeld umfasst, und die Fernsteuerungsschnittstellen-Kundenanwendung bei Ausführung des Weiteren funktionsfähig ist, um:
eine zusätzliche Tasteingabe vom Benutzer, die eine Stelle aufweist, die mit einer Stelle eines virtuellen Knopfes übereinstimmt, zu erkennen,
als Reaktion auf die zusätzliche Tasteingabe eine oder mehrere Steuerbefehle an die programmierbare Multimediasteuereinheit zu senden,
so dass bewirkt wird, dass die programmierbare Multimediasteuereinheit eine dem virtuellen Knopf entsprechende Handlung durchführt, und
als Reaktion auf die zusätzliche Tasteingabe eine visuelle Anzeige auf dem Tastbildschirm des Mobilgerätes darzustellen, so dass dem Benutzer ein visuelles Feedback bereitgestellt wird, dass der virtuelle Knopf gedrückt wurde.

3. System nach Anspruch 1, wobei die Art der Geste ein potentieller Schwenk ist, und der Indikator ein oder mehrere Richtungsindikatoren ist, die eine Richtung des potentiellen Schwenks anzeigen.

4. System nach Anspruch 1, wobei die Art der Geste ein aktueller Schwenk ist, und der Indikator eine Vielzahl von Richtungsindikatoren ist, die eine Richtung des aktuellen Schwenks anzeigen und die für die Dauer des aktuellen Schwenks sichtbar bleiben.

5. System nach Anspruch 1, wobei die Art der Geste ein Durchziehen ist, und der Indikator eine Vielzahl von Richtungsindikatoren ist, die eine Richtung des Durchziehens anzeigen.

6. System nach Anspruch 1, wobei das Mobilgerät ein Smartphone ist und das Anzeigegerät ein Fernsehgerät ist.

7. Verfahren, umfassend:
Veranlassen, dass ein Bildschirmanzeigemenüsystem auf einem Fernsehgerät dargestellt wird, wobei das Menüsystem eine Vielzahl wählbarer Optionen einschließt, die im Bildschirmanzeigemenüsystem manipuliert werden können und als Reaktion auf Steuerbefehle vom Bildschirmanzeigemenüsystem ausgewählt werden können;
Darstellen einer Eingabeschnittstelle auf einer Tastbildschirmanzeige eines vom Fernsehgerät getrennten Mobilgerätes, wobei die Eingabeschnittstelle ein Gestenfeld aufweist;
Erkennen einer Geste von einem Benutzer im Gestenfeld auf dem Mobilgerät;
Bestimmen einer Art und einer Richtung der Geste aus einer Vielzahl von Arten möglicher Gesten;
Senden eines oder mehrerer Steuerbefehle als Reaktion auf die Geste zum Manipulieren von einer der Optionen in dem auf dem Fernsehgerät angezeigten Bildschirmanzeigemenüsystem entsprechend der Art und der Richtung der Geste, um eine Option an eine bezeichnete Stelle in dem Bildschirmanzeigemenüsystem zu bringen, an der die Option ausgewählt werden kann;
**gekennzeichnet durch**:
Darstellen eines oder mehrerer Indikatoren im Gestenfeld als Reaktion auf die Geste, um dem Benutzer ein visuelles Feedback auf dem Mobilgerät bereitzustellen, das für die Art und Richtung der Geste spezifisch ist, wobei das Feedback bereitgestellt wird, um zwischen Gesten verschiedener Arten und unterschiedlicher Richtungen zu differenzieren.

8. Verfahren nach Anspruch 7, wobei die Eingabeschnittstelle des Weiteren eine Vielzahl virtueller Knöpfe getrennt von dem Gestenfeld enthält, und das Verfahren des Weiteren umfasst:
Erkennen einer zusätzlichen Tasteingabe vom Benutzer, die eine Stelle aufweist, die mit einer Stelle eines virtuellen Knopfes übereinstimmt;
Senden eines oder mehrerer Steuerbefehle als Reaktion auf die zusätzliche Tasteingabe, um eine dem virtuellen Knopf entsprechende Handlung durchzuführen; und
Darstellen einer visuellen Anzeige auf dem Tastbildschirm des Mobilgeräts als Reaktion auf die Tasteingabe, um dem Benutzer ein visuelles Feedback bereitzustellen, dass der virtuelle Knopf gedrückt wurde.

9. Verfahren nach Anspruch 7, wobei die Art der empfangenen Eingabe ein potentieller Schwenk ist.

10. Verfahren nach Anspruch 7, wobei die Art der empfangenen Eingabe ein aktueller Schwenk ist.

11. Verfahren nach Anspruch 7, wobei die Art der empfangenen Eingabe ein Durchziehen ist.

12. Verfahren nach Anspruch 7, wobei das Darstellen auf einem Bildschirmanzeigemenüsystem auf dem Fernsehgerät durch eine mit dem Fernsehgerät gekoppelte, programmierbare Multimediasteuereinheit durchgeführt wird, wobei die programmierbare Multimediasteuereinheit konfiguriert ist, eine Vielzahl unterschiedlicher Typen elektronischer Geräte einschließlich eines oder mehrerer Audioquellengeräte, eines oder mehrerer Videoquellengeräte, eines oder mehrerer Audiozielgeräte und eines oder mehrerer Anzeigegeräte außer dem Fernsehgerät zu steuern, wobei das Mobilgerät sich in drahtloser Verbindung mit der programmierbaren Multimediasteuereinheit befindet.

13. Nichtflüchtige, computerlesbare Medien, die ausführbare Anweisungen speichern, die bei Ausführung durch einen Prozessor funktionsfähig sind, um:
zu veranlassen, dass ein Bildschirmanzeigemenüsystem auf einem Anzeigegerät dargestellt wird, wobei das Bildschirmanzeigemenüsystem eine Vielzahl von Optionen enthält, die von dem Bildschirmanzeigemenüsystem ausgewählt werden können;
eine Eingabeschnittstelle auf einer Tastbildschirmanzeige eines Mobilgeräts darzustellen, wobei die Eingabeschnittstelle einen oder mehrere virtuelle Knöpfe und ein Gestenfeld aufweist;
eine Tasteingabe von dem Benutzer in der Eingabeschnittstelle zu erkennen, die eine Stelle aufweist, die mit einer Stelle eines virtuellen Knopfes übereinstimmt;
als Reaktion auf die Tasteingabe zu veranlassen, eine dem virtuellen Knopf entsprechende Handlung durch eine mit dem Anzeigegerät verbundene programmierbare Multimediasteuereinheit durchzuführen;
als Reaktion auf die Tasteingabe eine visuelle Anzeige auf dem Tastbildschirm des Mobilgerätes darzustellen, um dem Benutzer ein visuelles Feedback bereitzustellen, dass der virtuelle Knopf gedrückt wurde;
eine Geste von einem Benutzer im Gestenfeld auf dem Mobilgerät zu erkennen;
eine Art und eine Richtung der Geste unter der Vielzahl von Arten und Richtungen möglicher Gesten zu bestimmen;
als Reaktion auf die Geste zu veranlassen, dass eine der Optionen im Bildschirmanzeigemenüsystem, das auf dem Anzeigegerät dargestellt wird, in dem Bildschirmanzeigemenüsystem entsprechend der Art der Geste und in der Richtung manipuliert wird, so dass eine Option in eine bezeichnete Stelle in dem Bildschirmanzeigemenüsystem gebracht wird, wo die Option ausgewählt werden kann,
**dadurch gekennzeichnet, dass** sie des Weiteren funktionsfähig ist, um:
einen oder mehrere Indikatoren im Gestenfeld als Reaktion auf die Geste darzustellen, so dass dem Benutzer ein visuelles Feedback auf dem Mobilgerät bereitgestellt wird, das für die Art und die Richtung der Geste spezifisch ist, wobei das visuelle Feedback vorgesehen ist, um zwischen Gesten verschiedener Typen und unterschiedlicher Richtungen zu differenzieren.

## Revendications

1. Système comprenant :
un contrôleur multimédia programmable couplé à, et configuré pour commander une pluralité de types différents de dispositifs électroniques, le contrôleur multimédia programmable étant configuré pour afficher un système de menu d'affichage sur écran sur au moins un dispositif d'affichage, le système de menu d'affichage sur écran incluant une pluralité d'options à sélectionner qui sont capables de rotation sur le système de menu d'affichage sur écran et qui peuvent être sélectionnées depuis le système de menu d'affichage sur écran en réponse à des ordres de commande ;
un dispositif mobile séparé du contrôleur multimédia programmable et dudit au moins un dispositif d'affichage, le dispositif mobile étant configuré pour faire office de commande à distance pour le contrôleur multimédia programmable et au moyen duquel des ordres de commande pour interagir avec l'affichage sur écran peuvent être entrés, le dispositif mobile incluant une interface sans fil qui permet une communication sans fil avec le contrôleur multimédia programmable, un affichage à écran tactile, un processeur, et une mémoire configurée pour stocker au moins une application client formant interface de commande à distance qui,
lorsqu'elle est exécutée par le processeur, a pour fonction de :
afficher une interface d'entrée sur l'affichage à écran tactile, l'interface d'entrée ayant un champ gestuel,
détecter un geste d'un utilisateur dans le champ gestuel sur le dispositif mobile,
déterminer un type et une direction du geste parmi une pluralité de types et de directions de gestes possibles,
en réponse au geste, envoyer un ou plusieurs ordres de commande au contrôleur multimédia programmable pour amener le contrôleur multimédia programmable à mettre en rotation les options sur le système de menu d'affichage sur écran affiché sur ledit au moins un dispositif d'affichage, en accord avec le type de geste et avec la direction, pour amener une option à un emplacement désigné sur le système de menu d'affichage sur écran, où l'option peut être sélectionnée,
**caractérisé en ce qu'**il a en outre pour fonction de :
en réponse au geste, afficher un ou plusieurs indicateurs dans le champ gestuel pour fournir à l'utilisateur une rétroaction visuelle sur le dispositif mobile, qui est spécifique à la fois au type et à la direction du geste, la rétroaction visuelle présentée étant différente pour différents types et différentes directions de la pluralité possibles de types et de directions de gestes.

2. Système selon la revendication 1, dans lequel l'interface d'entrée inclut en outre une pluralité de boutons virtuels séparés du champ gestuel, et l'application client formant interface de commande à distance a en outre pour fonction, lorsqu'elle est exécutée, de :
détecter une entrée tactile additionnelle de la part de l'utilisateur ayant un emplacement qui coïncide avec un emplacement d'un bouton virtuel,
en réponse à l'entrée tactile additionnelle, envoyer un ou plusieurs ordres de commande au contrôleur multimédia programmable pour amener le contrôleur multimédia programmable à exécuter une action correspondant au bouton virtuel, et
en réponse à l'entrée tactile additionnelle, afficher une indication visuelle sur l'écran tactile du dispositif mobile pour fournir à l'utilisateur une rétroaction visuelle que le bouton virtuel a été pressé.

3. Système selon la revendication 1, dans lequel le type de geste est un mouvement panoramique potentiel et l'indicateur est constitué d'un ou plusieurs indicateurs directionnels qui indiquent une direction du mouvement panoramique potentiel.

4. Système selon la revendication 1, dans lequel le type de geste est un mouvement panoramique en cours et l'indicateur est constitué d'une pluralité d'indicateurs directionnels qui indiquent une direction du mouvement panoramique en cours et qui restent visibles pendant une durée du mouvement panoramique en cours.

5. Système selon la revendication 1, dans lequel le type de geste est un glissement et l'indicateur est constitué d'une pluralité d'indicateurs directionnels qui indiquent une direction de glissement.

6. Système selon la revendication 1, dans lequel le dispositif mobile est un téléphone dit "smartphone", et le dispositif d'affichage est un téléviseur.

7. Procédé comprenant les étapes consistant à :
amener un système de menu d'affichage sur écran à être affiché sur un téléviseur, le système de menu incluant une pluralité d'options à sélectionner qui peuvent être manipulées dans le système de menu d'affichage sur écran et qui peuvent être sélectionnées depuis le système de menu d'affichage sur écran en réponse à des ordres de commande ;
afficher une interface d'entrée sur un affichage à écran tactile d'un dispositif mobile qui est séparé du téléviseur, l'interface d'entrée ayant un champ gestuel ;
détecter un geste d'un utilisateur dans le champ gestuel sur le dispositif mobile ;
déterminer un type et une direction du geste parmi une pluralité de types de gestes possibles ;
en réponse au geste, envoyer un ou plusieurs ordres de commande pour manipuler l'une des options dans le système de menu d'affichage sur écran affiché sur le téléviseur, en accord avec le type et la direction du geste,
afin d'amener une option à un emplacement désigné dans le système de menu d'affichage sur écran, emplacement auquel l'option peut être sélectionnée ;
**caractérisé par** :
en réponse au geste, l'affichage d'un ou plusieurs indicateurs dans le champ gestuel pour fournir à l'utilisateur une rétroaction visuelle sur le dispositif mobile, qui est spécifique du type et de la direction du geste, la rétroaction visuelle fournie étant destinée à une différenciation entre des gestes de types différents et de directions différentes.

8. Procédé selon la revendication 7, dans lequel l'interface d'entrée inclut en outre une pluralité de boutons virtuels séparés du champ gestuel, et le procédé comprend en outre les étapes consistant à :
détecter une entrée tactile additionnelle de la part de l'utilisateur ayant un emplacement qui coïncide avec un emplacement d'un bouton virtuel ;
en réponse à l'entrée tactile additionnelle, envoyer un ou plusieurs ordres de commande pour exécuter une action correspondant au bouton virtuel, et
en réponse à l'entrée tactile, afficher une indication visuelle sur l'écran tactile du dispositif mobile pour fournir à l'utilisateur une rétroaction visuelle que le bouton virtuel a été pressé.

9. Procédé selon la revendication 7, dans lequel le type d'entrée reçue est un mouvement panoramique potentiel.

10. Procédé selon la revendication 7, dans lequel le type d'entrée reçue est un mouvement panoramique en cours.

11. Procédé selon la revendication 7, dans lequel le type d'entrée reçue est un glissement.

12. Procédé selon la revendication 7, dans lequel l'affichage d'un système de menu d'affichage sur écran sur le téléviseur est effectué par un contrôleur multimédia programmable couplé au téléviseur, le contrôleur multimédia programmable étant configuré pour commander une pluralité de types différents de dispositifs électroniques incluant un ou plusieurs dispositifs formant source audio, un ou plusieurs dispositifs formant source vidéo, et un ou plusieurs dispositifs de destination audio et un ou plusieurs dispositifs d'affichage autre(s) que le téléviseur, dans lequel le dispositif mobile est en communication sans fil avec le contrôleur multimédia programmable.

13. Support non transitoire lisible à l'ordinateur qui stocke des instructions exécutables qui, lorsqu'elles sont exécutées par un processeur, ont pour fonction de :
amener un système de menu d'affichage sur écran à être affiché sur un dispositif d'affichage, le système de menu d'affichage sur écran incluant une pluralité d'options qui peuvent être sélectionnées depuis le système de menu d'affichage sur écran ;
afficher une interface d'entrée sur un affichage à écran tactile d'un dispositif mobile, l'interface d'entrée ayant un ou plusieurs boutons virtuels et un champ gestuel ;
détecter une entrée tactile de la part de l'utilisateur dans l'interface d'entrée ayant un emplacement qui coïncide avec un emplacement d'un bouton virtuel ;
en réponse à l'entrée tactile, amener une action correspondant au bouton virtuel à être exécutée par un contrôleur multimédia programmable couplé au dispositif d'affichage ;
en réponse à l'entrée tactile, afficher une indication visuelle sur l'écran tactile du dispositif mobile pour fournir à l'utilisateur une rétroaction visuelle que le bouton virtuel a été pressé ;
détecter un geste de la part d'un utilisateur dans le champ gestuel sur le dispositif mobile ;
déterminer un type et une direction du geste parmi une pluralité de types et de directions de gestes possibles ;
en réponse au geste, amener l'une des options dans le système de menu d'affichage sur écran qui est affiché sur le dispositif d'affichage à être manipulée dans le système de menu d'affichage sur écran en accord avec le type de geste et avec la direction, afin d'amener une option à un emplacement désigné sur le système de menu d'affichage sur écran, emplacement où l'option peut être sélectionnée ;
**caractérisé en ce qu'**il a en outre pour fonction de :
en réponse au geste, afficher un ou plusieurs indicateurs dans le champ gestuel pour fournir à l'utilisateur une rétroaction visuelle sur le dispositif mobile qui est spécifique du type et de la direction du geste, la rétroaction visuelle fournie étant destinée à faire une différenciation entre des gestes de types différents et de directions différentes.
